(19) Europäisches Patentamt
European Patent Office
Office européen des brevets

(11) EP 4 559 954 A1

(12) EUROPEAN PATENT APPLICATION
published in accordance with Art. 153(4) EPC

(43) Date of publication:
**28.05.2025 Bulletin 2025/22**

(21) Application number: **23843211.6**

(22) Date of filing: **30.06.2023**

(51) International Patent Classification (IPC):
***C08G 73/10*** *(2006.01)* ***C08L 79/08*** *(2006.01)*
***C09D 179/08*** *(2006.01)*

(52) Cooperative Patent Classification (CPC):
**C08G 73/10; C08L 79/08; C09D 179/08**

(86) International application number:
**PCT/KR2023/009190**

(87) International publication number:
**WO 2024/019360 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.07.2022 KR 20220090818**
**21.06.2023 KR 20230079373**

(71) Applicant: **PI Advanced Materials Co., Ltd.**
**Chungcheongbuk-do 27818 (KR)**

(72) Inventors:
- **MOON, Gyeong Min**
**Chungcheongbuk-do 27818 (KR)**
- **RO, Gyeong Hyeon**
**Chungcheongbuk-do 27818 (KR)**
- **LEE, Ik Sang**
**Chungcheongbuk-do 27818 (KR)**

(74) Representative: **Eisenführ Speiser Patentanwälte Rechtsanwälte PartGmbB**
**Postfach 10 60 78**
**28060 Bremen (DE)**

# (54) POLYAMIC ACID COMPOSITION

(57) The present application provides a polyamic acid composition capable of simultaneously realizing excellent storage stability, a low dielectric constant, heat resistance, insulation, and mechanical properties under harsh conditions (e.g., high temperature), a polyimide which is a cured product of the composition, a covering material containing the polyimide, and an electronic device including the covering material.

EP 4 559 954 A1

**Description**

BACKGROUND

## 1. Field of the Invention

The present application relates to a polyamic acid composition, a polyimide which is a cured product of the composition, a covering material containing the polyimide, and an electronic device including the covering material.

## 2. Discussion of Related Art

An insulating layer (insulation covering) covering a conductor is required to have excellent insulation, adhesion to the conductor, heat resistance, mechanical strength, and the like.
In addition, in electrical devices with high applied voltage, such as motors used at high voltage, a high voltage is applied to an insulated wire constituting the electrical device, and a partial discharge (corona discharge) is likely to occur on the surface of the insulation covering.
The occurrence of a corona discharge may cause a local temperature increase or the generation of ozone or ions, and as a result, the insulation covering of the insulated wire may deteriorate, causing a breakdown at an early stage and shortening the life of the electrical device.
For the insulated wire used at high voltage, there is a need to improve the corona discharge initiation voltage for the above reasons, and it is known that lowering the dielectric constant of an insulating layer is effective for this purpose.
Examples of resins usable for the insulating layer may include a polyimide resin, a polyamideimide resin, and a polyesterimide resin.
Among these, particularly, the polyimide resin is a material having excellent heat resistance and insulation and has excellent properties for use as a covering material for conductors.
The polyimide resin refers to a highly heat-resistant resin prepared by solution polymerization of an aromatic dianhydride and an aromatic diamine or aromatic diisocyanate to prepare a polyamic acid derivative, followed by ring closure dehydration at high temperature to imidize.
As a method of forming an insulation covering using the polyimide resin, for example, a method of applying or coating a polyimide varnish, which is a polyimide resin precursor, around an electrical wire made of a conductor, and then imidizing the polyimide varnish in a curing furnace capable of heat treatment at a predetermined temperature may be used.
However, general polyimide resins have poor storage stability despite their excellent physical properties and do not have excellent adhesion to conductors, so that when an insulation covering is formed, a problem in appearance may occur due to a lifting phenomenon between the conductor and the covering.
Therefore, the production of a polyimide varnish for conductor covering that simultaneously satisfies storage stability, heat resistance, insulation, a low dielectric constant, adhesion and mechanical properties is required.

SUMMARY OF THE INVENTION

The present application provides a polyamic acid composition capable of simultaneously realizing excellent storage stability, a low dielectric constant, heat resistance, insulation, and mechanical properties under harsh conditions (e.g., high temperature), a polyimide which is a cured product of the composition, a covering material containing the polyimide, and an electronic device including the covering material.
The present application relates to a polyamic acid composition. The polyamic acid composition according to the present invention may be a polyimide varnish capable of providing a polyimide capable of simultaneously satisfying flexibility, light resistance, heat resistance, insulation, adhesion and mechanical properties at high temperatures after curing.
The polyamic acid composition includes a diamine monomer and a dianhydride monomer as polymerization units, and a viscosity change rate at 23 °C ($\Delta V_{23°C}$) of General Formula 1 below satisfies -25% to +25%.

[General Formula 1]

$$\Delta V_{23°C} = (V2 - V1)/V1 \times 100$$

in General Formula 1, $\Delta V_{23°C}$ represents a change rate of viscosity (V2) of the polyamic acid composition stored for 1 week in a sealed storage container under 23 °C temperature conditions based on the viscosity (V1) of the polyamic acid composition before storage.
For example, the viscosity change rate at 23 °C ($\Delta V_{23°C}$) may satisfy -25% to +25%, - 22% to +22%, -20% to

+20%, -19% to +19%, -18% to +18%, -16% to +16%, -14% to +14%, -12% to +12%, or -10% to +10%. The viscosities (V1, V2) in General Formula 1 may be measured, for example, using Rheostress 600 manufactured by Haake GmbH, and may be measured at a shear rate of 1/s, a temperature of 30 °C, and a plate gap of 1 mm. The storage container may use various known materials without limitation, and for example, an aluminum iron can or a PP material bottle may be used.

As the polyamic acid composition according to the present application satisfies the above General Formula 1, the composition has excellent storage stability at 23 °C

In the polyamic acid composition according to the present application, a viscosity change rate at 30 °C ($\Delta V_{30\,°C}$) of the following General Formula 2 may satisfy -30% to +30%.

[General Formula 2]

$$\Delta V_{30\,°C} = (V4 - V3)/V3 \times 100$$

in General Formula 2, $\Delta V_{30\,°C}$ represents a change rate of viscosity (V4) of the polyamic acid composition stored for 1 week in a sealed storage container under 30 °C temperature conditions based on the viscosity (V3) of the polyamic acid composition before storage.

For example, the viscosity change rate at 30 °C ($\Delta V_{30\,°C}$) may satisfy -30% to +30%, -25% to +25%, -22% to +22%, -20% to +20%, -19% to +19%, -18% to +18%, -16% to +16%, -14% to +14%, -12% to +12%, or -10% to +10%.

As the polyamic acid composition according to the present application satisfies the above General Formula 2, the composition has excellent storage stability at 30 °C

The viscosities (V3, V4) in General Formula 2 may be measured, for example, using Rheostress 600 manufactured by Haake GmbH, and may be measured at a shear rate of 1/s, a temperature of 30 °C, and a plate gap of 1 mm.

The polyamic acid composition according to the present application may further include a modified monomer represented by Chemical Formula 1 below.

[Chemical Formula 1]

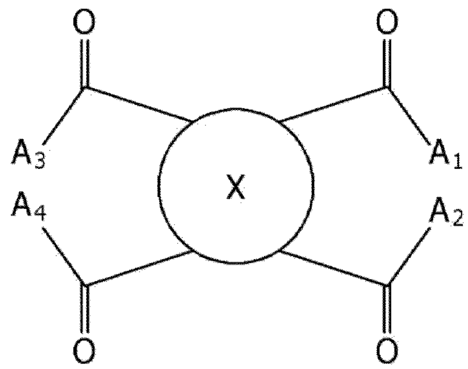

in Chemical Formula 1, $A_1$ to $A_4$ are each independently selected from a hydroxyl group (-OH), an amine group ($-NH_2$), an alkoxy group, or an oxygen anion ($-O^-$),

in Chemical Formula 1, X is a tetravalent aliphatic ring group, a tetravalent heteroaliphatic ring group, a tetravalent aromatic ring group, or a tetravalent heteroaromatic ring group, and a carbon atom of a carbonyl group in Chemical Formula 1 is linked to a ring-constituting atom of the aliphatic ring group, the heteroaliphatic ring group, the aromatic ring group, or the heteroaromatic ring group, and

the aliphatic ring group, the heteroaliphatic ring group, the aromatic ring group, or the heteroaromatic ring group is a monocyclic ring,

conjugated to each other to form a polycyclic ring, or

linked by a linking group including one or more of divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, - O-, -S-, -C(=O)-, $-S(=O)_2-$ and $-Si(R_b)_2-$, wherein $R_b$ is hydrogen or an alkyl group.

Preferably, X in Chemical Formula 1 is phenyl, biphenyl,

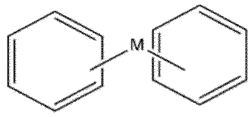

or an aliphatic ring group, and
M includes at least one selected from the group consisting of a single bond, an alkylene group, an alkylidene group, -O-, -S-, -C (=O)-, and -S $(=O)_2$-.

The modified monomer represented by Chemical Formula 1 may be derived from a dianhydride monomer, which is a polymerization unit of polyamic acid. As the number of moles of the modified monomer increases, the elongation of the polyimide, which is a cured product, tends to decrease, and when a conductor is covered, the elongation can be induced to match the winding for conductor covering by adjusting the number of moles of the modified monomer, and accordingly, the lifting phenomenon between the winding and the covering may be suppressed.

In one example, the modified monomer represented by Chemical Formula 1 may be included in a range of 6 to 15 mol% based on 100 mol% of the diamine monomer of the polyamic acid. The modified monomer may be included in a range of 6 to 14 mol%, 6 to 13 mol%, 6 to 12 mol%, 6 to 11 mol%, 6 to 10 mol%, 6.5 to 15 mol%, 6.5 to 14 mol%, 6.5 to 13 mol%, 6.5 to 12 mol%, 6.5 to 11 mol%, 6.5 to 10 mol%, 7 to 15 mol%, 7 to 14 mol%, 7 to 13 mol%, 7 to 12 mol%, 7 to 11 mol%, or 7 to 10 mol%, based on 100 mol% of the diamine monomer of the polyamic acid. As the molar ratio of the modified monomers is adjusted within the above range, excellent storage stability, improved elongation upon curing, and excellent thermal stability, electrical properties, and mechanical stability may be realized.

In another example, a molar ratio (A:B) of the dianhydride monomer (A) and the modified monomer (B) of the polyamic acid may range from 1:0.06 to 1:0.15, from 1:0.06 to 1:0.14, from 1:0.06 to 1:0.13, from 1:0.06 to 1:0.12, from 1:0.06 to 1:0.11, from 1:0.06 to 1:0.1, from 1:0.07 to 1:0.14, from 1:0.07 to 1:0.13, from 1:0.07 to 1:0.12, from 1:0.07 to 1:0.11, or from 1:0.07 to 1:0.1.

In one embodiment, the dianhydride monomer, which is a polymerization unit of the polyamic acid, includes at least one compound represented by Chemical Formula 2 below.

[Chemical Formula 2]

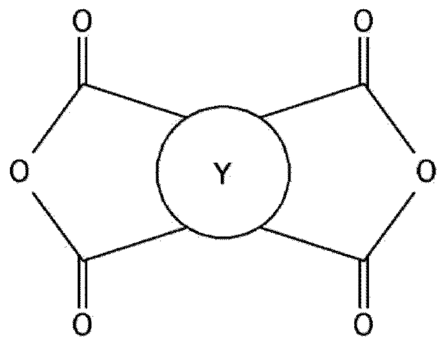

In Chemical Formula 2, Y is a tetravalent aliphatic ring group, a tetravalent heteroaliphatic ring group, a tetravalent aromatic ring group, or a tetravalent heteroaromatic ring group, and a carbon atom of a carbonyl group in Chemical Formula 2 is linked to a ring-constituting atom of the aliphatic ring group, the heteroaliphatic ring group, the aromatic ring group or the heteroaromatic ring group, and

the aliphatic ring group, the heteroaliphatic ring group, the aromatic ring group, or the heteroaromatic ring group is a monocyclic ring,
conjugated to each other to form a polycyclic ring, or
linked by a linking group including one or more of divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, - O-, -S-, -C(=O)-, $-S(=O)_2-$ and $-Si(R_a)_2-$, wherein $R_a$ is hydrogen or an alkyl group.

Preferably, Y in Chemical Formula 2 is phenyl, biphenyl,

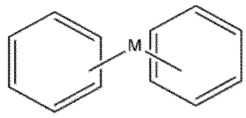

or an aliphatic ring group, and
M includes at least one selected from the group consisting of a single bond, an alkylene group, an alkylidene group, -O-, -S-, -C (=O)-, and -S $(=O)_2$-.

In this specification, the term "aliphatic ring group" may mean an aliphatic ring group having 3 to 30 carbon atoms, 4 to 25 carbon atoms, 5 to 20 carbon atoms, or 6 to 16 carbon atoms, unless otherwise specified. Specific examples of a tetravalent aliphatic ring group may include groups obtained by removing four hydrogen atoms from a ring, such as a cyclohexane ring, a cycloheptane ring, a cyclodecane ring, a cyclododecane ring, a norbornane ring, an isobornane ring, an adamantane ring, a cyclododecane ring, and a dicyclopentane ring.

In this specification, the term "aromatic ring group" may mean an aromatic ring group having 4 to 30 carbon atoms, 5 to 25 carbon atoms, 6 to 20 carbon atoms, or 6 to 16 carbon atoms, unless otherwise specified. The aromatic ring may be a monocyclic ring or a condensed ring. Examples of the tetravalent aromatic hydrocarbon ring group include groups obtained by removing four hydrogen atoms from a benzene ring, a naphthalene ring, an anthracene ring, a phenanthrene ring, a perylene ring, a tetracene ring, or a pyrene ring.

In this specification, the term "arylene group" may mean a divalent organic group derived from the aromatic ring group.

The term "heterocyclic group" used herein includes a heteroaliphatic ring group and a heteroaromatic ring group.

In this specification, the term "heteroaliphatic ring group" may refer to a ring group in which at least one of the carbon atoms of the aliphatic ring group is replaced with one or more heteroatoms selected from the group consisting of nitrogen, oxygen, sulfur, and phosphorus.

In this specification, the term "heteroaromatic ring group" may refer to a ring group in which at least one of the carbon atoms of the aromatic ring group is replaced with one or more heteroatoms selected from the group consisting of nitrogen, oxygen, sulfur, and phosphorus, unless otherwise specified. The heteroaromatic ring group may be a monocyclic ring or a condensed ring.

The aliphatic ring group, the heteroaliphatic ring group, the aromatic ring group, or the heteroaromatic ring group may be each independently substituted with one or more substituents selected from the group consisting of halogen, a hydroxyl group, a carboxy group, a halogen-substituted or unsubstituted alkyl group having 1 to 4 carbon atoms, and an alkoxy group having 1 to 4 carbon atoms.

In this specification, the term "single bond" may mean a bond linking both atoms without any atoms. For example, when X in Chemical Formula 1 and Y in Chemical Formula 2 are

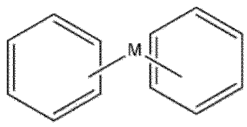

,

and here when M is a single bond, both aromatic rings may be directly linked to each other.

In this specification, the term "alkyl group" may mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may have a linear, branched or cyclic structure and may be optionally substituted with one or more substituents. The substituent may be, for example, a polar functional group such as one or more substituents consisting of a halogen, a hydroxyl group, an alkoxy group, a thiol group, or a thiol ether group.

In this specification, the term "alkenyl group" may mean an alkenyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkenyl group may have a linear, branched or cyclic structure and may be optionally substituted with one or more substituents. The substituent may be, for example, a polar functional group such as one or more substituents consisting of a halogen, a hydroxyl group, an alkoxy group, a thiol group, or a thiol ether group.

In this specification, the term "alkynyl group" may mean an alkynyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkynyl group may have a linear, branched or cyclic structure and may be optionally substituted with one or more substituents. The substituent may be, for example, a polar functional group such as one or more substituents consisting of a halogen, a hydroxyl group, an alkoxy group, a thiol group, or a thiol ether group.

In this specification, the term "alkylene group" may mean an alkylene group having 2 to 30 carbon atoms, 2 to 25 carbon atoms, 2 to 20 carbon atoms, 2 to 16 carbon atoms, 2 to 12 carbon atoms, 2 to 10 carbon atoms, or 2 to 8 carbon

atoms, unless otherwise specified. The alkylene group is a divalent organic group in which two hydrogens are removed from different carbon atoms, may have a linear, branched or cyclic structure, and may be optionally substituted with one or more substituents. The substituent may be, for example, a polar functional group such as one or more substituents consisting of a halogen, a hydroxyl group, an alkoxy group, a thiol group, or a thiol ether group.

In this specification, the term "alkylidene group" may mean an alkylidene group having 1 to 30 carbon atoms, 1 to 25 carbon atoms, 1 to 20 carbon atoms, 1 to 16 carbon atoms, 1 to 12 carbon atoms, 1 to 10 carbon atoms, or 1 to 8 carbon atoms, unless otherwise specified. The alkylidene group is a divalent organic group in which two hydrogens are removed from one carbon atom, and may have a linear, branched or cyclic structure and may be optionally substituted with one or more substituents. The substituent may be, for example, a polar functional group such as one or more substituents consisting of a halogen, a hydroxyl group, an alkoxy group, a thiol group, or a thiol ether group.

In this specification, the term "alkoxy group" may mean an alkoxy group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkoxy group may have a linear, branched or cyclic alkyl group, and the alkyl group may be optionally substituted with one or more substituents. The substituent may be, for example, one or more substituents consisting of a halogen, a hydroxyl group, an alkoxy group, a thiol group, or a thiol ether group.

In this specification, the term "alkylamine group" includes a monoalkylamine (-NHR) or dialkylamine ($-NR_2$), where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of a halogen, a hydroxyl group, an alkoxy group, a thiol group, or a thiol ether group.

In this specification, the term "alkylamide" includes a monoalkylamide (-C(O)NHR) or dialkylamide ($-C(O)NR_2$), where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of a halogen, a hydroxyl group, an alkoxy group, a thiol group, or a thiol ether group.

In this specification, the term "thiol ether group" or "sulfide" means -SR, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of a halogen, a hydroxyl group, an alkoxy group, a thiol group, or a thiol ether group.

In this specification, the term "sulfoxide" means -S(O)R, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of a halogen, a hydroxyl group, an alkoxy group, a thiol group, or a thiol ether group.

In this specification, the term "carbonyl" includes -C(O)R, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of a halogen, a hydroxyl group, an alkoxy group, a thiol group, or a thiol ether group.

In this specification, the term "ester" includes -C(O)OR or -OC(O)R, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted with one or more substituents. The substituent may be, for example, one or more substituents consisting of a halogen, a hydroxyl group, an alkoxy group, a thiol group, or a thiol ether group.

Examples of the aliphatic tetracarboxylic dianhydride satisfying Chemical Formula 2 may include 1,2,4,5-cyclohexane tetracarboxylic dianhydride (or HPMDA), bicyclo[2.2.2]octane-2,3,5,6-tetracarboxylic 2:3,5:6-dianhydride (BODA), 1,2,3,4-cyclohexane tetracarboxylic dianhydride (CHMDA), bicyclo[2.2.1]heptane-2,3,5,6-tetracarboxylic 2:3,5:6-dianhydride (BHDA), butane-1,2,3,4-tetracarboxylic dianhydride (BTD), bicyclo-[2.2.2]oct-7-ene-2-exo,3-exo,5-exo,6-exo-2,3:5,6-dianhydride (BTA), 1,2,3,4-cyclobutane tetracarboxylic dianhydride (CBDA), bicyclo[4.2.0]octane-3,4,7,8-tetracarboxylic dianhydride (OTD), norbonane-2-spiro-α-cyclohexanone-α'-spiro-2"-norbonane-5,5",6,6"-tetracarboxylic dianhydride (ChODA), cyclopentanone bis-spironorbonane tetracarboxylic dianhydride (CpODA), bicyclo [2.2.1]heptane-2,3,5-tricarboxyl-5-acetic dianhydride (BSDA), dicyclohexyl-3,3',4,4'-tetracarboxylic dianhydride (DCDA), dicyclohexyl-2,3'3,4'-tetracarboxylic dianhydride (HBPDA), 5,5'-oxybis(hexahydro-1,3-isobenzofurandione) (HODPA), 5,5'-methylenebis(hexahydro-1,3-isobenzofurandione) (HMDPA), 3,3'-(1,4-piperazindi yl)bis[dihydro-2,5-furandione] (PDSA), 5-(2,5-dioxotetrahydrofurfuryl)-3-methyl-3-cyclohexane-1,2-dicarboxylic anhydride (DOCDA), 3,4-dicarboxy-1,2,3,4-tetrahydro-1-naphthalene succinic dianhydride (TDA), 3,4-dicarboxy-1,2,3,4-tetrahydro-6-methyl-1-naphthalene succinic dianhydride (MTDA), 3,4-dicarboxy-1,2,3,4-tetrahydro-6-fluoro-1-naphthalene succinic dianhydride (FTDA), 3,3,3',3'-tetramethyl-1,1'-spirobisindan-5,5',6,6'-tetracarboxylic anhydride (SBIDA), 4,4,4',4'-tetramethyl-3,3',4,4'-tetrahydro-2,2'-spirobi[furo[3,4-g]chromene]-6,6',8,8'-tetraone (SBCDA), and 9,10-difluoro-9,10-bis(trifluoromethyl)-9,10-dihydroanthracene-2,3,6,7-tetracarboxylic acid dianhydride (6FDA).

Examples of the aromatic tetracarboxylic dianhydride satisfying Chemical Formula 2 may include pyromellitic dianhydride (or PMDA), 3,3',4,4'-biphenyltetracarboxylic dianhydride (or BPDA), 2,3,3',4'-biphenyltetracarboxylic dianhydride (or a-BPDA), oxydiphthalic dianhydride (or ODPA), diphenylsulfone-3,4,3',4'-tetracarboxylic dianhydride (or DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, 3,3',4,4'-benzophenonetetracarboxylic dianhydride (or BTDA), bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalenetetracarboxylic dianhydride, 1,4,5,8-naphthalenetetracarboxylic dianhydride, and 4,4'-(2,2-hexafluoroisopropylidene)diphthalic dianhydride (6-FDA).

In one embodiment, the dianhydride monomer may be preferably one or more selected from aromatic tetracarboxylic dianhydrides, for example PDMA, BPDA, a-BPDA, ODPA, DSDA, or BTDA.

In one embodiment, the diamine monomer may include at least one compound represented by Chemical Formula 3 below.

[Chemical Formula 3]

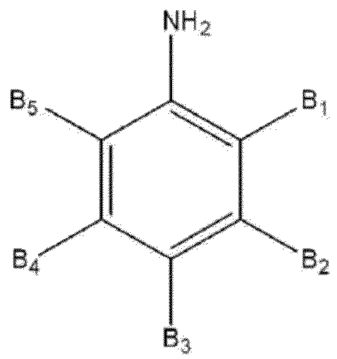

In Chemical Formula 3, any one of $B_1$ to $B_5$ is an amino group, and the others are hydrogen; a halogen; a hydroxyl group; a carboxyl group; or a halogen-substituted or unsubstituted alkyl group.

As an example, the diamine monomer is an aromatic diamine, and may be classified as follows.

1) Diamines having one benzene nucleus in their structure, for example, a diamine having a relatively rigid structure, such as 1,4-diaminobenzene (or p-phenylenediamine, PPD), 1,3-diaminobenzene, 2,4-diaminotoluene, 2,6-diaminotoluene, or 3,5-diaminobenzoic acid (or DABA);

2) Diamines having two benzene nuclei in their structure, such as diaminodiphenyl ethers such as 4,4'-diaminodiphenyl ether (or oxydianiline, ODA) and 3,4'-diaminodiphenyl ether, 4,4'-diaminodiphenylmethane (methylenediamine), 3,3'-dimethyl-4,4'-diaminobiphenyl, 2,2'-dimethyl-4,4'-diaminobiphenyl, 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, bis(4-aminophenyl)sulfide, 4,4'-diaminobenzanilide, 3,3'-dichlorobenzidine, 3,3'-dimethylbenzidine (or o-tolidine), 2,2'-dimethylbenzidine (or m-tolidine), 3,3'-dimethoxybenzidine, 2,2'-dimethoxybenzidine, 3,3'-diaminodiphenyl ether, 3,4'-diaminodiphenyl ether, 4,4'-diaminodiphenyl ether, 3,3'-diaminodiphenylsulfide, 3,4'-diaminodiphenylsulfide, 4,4'-diaminodiphenylsulfide, 3,3'-diaminodiphenylsulfone, 3,4'-diaminodiphenylsulfone, 4,4'-diaminodiphenylsulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenylsulfoxide, 3,4'-diaminodiphenylsulfoxide, or 4,4'-diaminodiphenylsulfoxide;

3) Diamine having three benzene nuclei in their structure, such as 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene, 1,4-bis(3-aminophenoxy)benzene (or TPE-Q), 1,4-bis(4-aminophenoxy)benzene (or TPE-Q), 1,3-bis(3-aminophenoxy)-4-trifluoromethylbenzene, 3,3'-diamino-4-(4-phenyl) phenoxybenzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, or 1,4-bis[2-(4-aminophenyl)isopropyl]benzene;

4) Diamines having four benzene nuclei in their structure, such as 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis [3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy) phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl] propane, 2,2-bis[4-(4-aminophenoxy)phenyl]propane (BAPP), 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy) phenyl]-1,1,1,3,3,3-hexafluoropropane, or 2,2-bis[4-(4-aminophenoxy)phenyl]-1,1,1,3,3,3-hexafluoropropane.

The diamine monomer may be used alone or in a combination of two or more types, as necessary, and a combination of two or more types of diamine monomers having different structural properties, for example, a diamine having one benzene nucleus in its structure and a diamine having two or more benzene nuclei in its structure may be used in consideration of bond dissociation energy.

In one embodiment, the diamine monomer may include at least two or more of 1,4-diaminobenzene (PPD), 4,4'-diaminodiphenyl ether (or oxydianiline, ODA), 1,3-diaminobenzene (MPD), 2,4-diaminotoluene, 2,6-diaminotoluene, and 4,4'-methylenediamine (MDA), for example, 1,4-diaminobenzene (PPD) and 4,4'-diaminodiphenyl ether (or oxydianiline, ODA).

In one specific example, the polyamic acid composition may include a solid content of 5 to 40% by weight, 5 to 35% by weight, 10 to 40% by weight, 10 to 35% by weight, 10 to 30% by weight, 15 to 40% by weight, 15 to 35% by weight, preferably 15 to 30% by weight, based on the total weight. In the present application, by controlling the solid content of the polyamic acid composition, it is possible to prevent an increase in manufacturing costs and process time, which is caused by removing a large amount of solvent during a curing process, while controlling an increase in viscosity.

In one embodiment, the polyamic acid of the present application may have a weight average molecular weight ranging from 10,000 to 100,000g/mol, 15,000 to 80,000 g/mol, 18,000 to 70,000 g/mol, 20,000 to 60,000 g/mol, 25,000 to 55,000 g/mol, or 30,000 to 50,000 g/mol. In the present application, the term "weight average molecular weight" means a conversion value for standard polystyrene as measured by gel permeation chromatography (GPC).

In this application, the polyamic acid may be included in the range of 1 to 50% by weight, 1 to 45% by weight, 1 to 40% by weight, 1 to 30% by weight, 5 to 50% by weight, 5 to 45% by weight, 5 to 40% by weight, 5 to 30% by weight, 5 to 25% by weight, 5 to 20%, 10 to 20% by weight, or 15 to 20% by weight, based on a total solid content.

The polyamic acid composition of the present application may have a low viscosity characteristic. The polyamic acid composition of the present application may have a viscosity of 50,000 cP or less, 40,000 cP or less, 30,000 cP or less, 20,000 cP or less, 10,000 cP or less, or 9,000 cP or less, as measured at a temperature of 23 °C and a shear rate of 1 $s^{-1}$. The lower limit is not particularly limited, but may be 500 cP or more or 1,000 cP or more. Preferably, the viscosity may be in the range of 1,000 to 30,000 cP. The viscosity may be measured, for example, using Rheostress 600 manufactured by Haake GmbH, and may be measured at a shear rate of 1/s, a temperature of 23 °C, and a plate gap of 1 mm. The present application can provide a polyamic acid composition with good processability and easy product application by adjusting the viscosity range.

In the present application, the polyamic acid composition may include an organic solvent. The organic solvent is not particularly limited as long as it is an organic solvent capable of dissolving the polyamic acid, but may be, for example, an aprotic polar solvent.

The aprotic polar solvent may include, for example, amide-based solvents such as N,N'-dimethylformamide (DMF), N,N'-diethylformamide (DEF), N,N'-dimethylacetamide (DMAc), or dimethylpropanamide (DMPA); phenol-based solvents such as p-chlorophenol or o-chlorophenol; N-methyl-pyrrolidone (NMP), gamma butyrolactone (GBL) or diglyme, and these solvents may be used alone or in combination of two or more.

In the present application, in some cases, the solubility of the polyamic acid may be adjusted by using an auxiliary solvent such as toluene, tetrahydrofuran, acetone, methyl ethyl ketone, methanol, ethanol, or water.

In one example, the organic solvent may be, for example, N-methyl-pyrrolidone (NMP).

The polyamic acid may be formed by polymerization of a diamine monomer and a dianhydride monomer in an inert atmosphere and a temperature range of 20 to 60 °C

This application also relates to a polyimide, which is a cured product of the polyamic acid composition described above. As the polyimide is cured from the polyamic acid composition described above, flexibility, light resistance, heat resistance, insulation, adhesion, and mechanical properties at high temperatures may be simultaneously satisfied.

The polyimide may be formed by thermal curing of the polyamic acid. The thermal curing may be performed at a temperature range of, for example, 100 to 600 °C.

The polyimide may have various controlled physical properties in the following numerical range by adjusting the material and content ratio of the polyamic acid composition described above.

The following physical properties may be measured after fabricating a sample in the form of a polyimide film having a thickness of 10 to 30 μm.

For example, the elongation of the polyimide measured using a universal testing machine (UTM) may be in the range of 10 to 60%. For example, an upper limit of the elongation may be 58% or less, 55% or less, 53% or less, 50% or less, 45% or less, 40% or less, 35% or less, 30% or less, or 25% or less, and a lower limit may be 10% or more, 12% or more, 15% or more, 18% or more, or 20% or more.

The polyimide may have a tensile strength of 500 MPa or less, for example, 450 MPa or less, 400 MPa or less, 350 MPa or less, 300 MPa or less, 250 MPa or less, 200 MPa or less, 195 MPa or less, 190 MPa or less, or 150 MPa or less, as measured using a UTM device, and a modulus of 15 GPa or less, 12 GPa or less, 11 GPa or less, 10 GPa or less, 9 GPa or less, 8 GPa or less, 7 GPa or less, 6 GPa or less, 5 GPa or less, 4 GPa or less, or 3 GPa or less. The measurement may be performed using a UTM device under conditions of a width of 20 mm, a grip distance of 50 mm, and a cross-head speed of 20 min/min.

In addition, the polyimide may have a coefficient of thermal expansion (CTE) of 0.1 ppm/°C to 50 ppm/°C, 0.5 ppm/°C to 50 ppm/°C, 1 ppm/°C to 50 ppm/°C, 5 ppm/°C to 50 ppm/°C, 10 ppm/°C to 45 ppm/°C, 15 ppm/°C to 40 ppm/°C, 20 ppm/°C to 40 ppm/°C, 25 ppm/°C to 40 ppm/°C, or 25 ppm/°C to 35 ppm/°C, as measured using a thermo mechanical analysis (TMA) device. The measurement may be performed while applying a load of 0.02 N using a TMA device in a temperature range of 50 to 200 °C at a temperature increase rate of 10 °C/min.

The polyimide may have a glass transition temperature of 200 to 500 °C, 250 to 450 °C, 300 to 400 °C, or 350 to 400 °C, as measured using a dynamic mechanical analysis (DMA) device. The measurement may be performed using the DMA device at a temperature increase rate of 5 °C/min.

In addition, the polyimide may have a 5% thermal decomposition temperature (td) of 450 to 650 °C, 450 to 600 °C, or 450 to 580 °C, as measured using a thermo gravimetric analysis (TGA) device. The measurement may be performed using a TGA device at a temperature increase rate of 10 °C/min for 30 minutes after preheating to a temperature of 150 °C.

In addition, the polyimide may have a dielectric constant (Dk) of 1 to 5, 1 to 4.5, 1.5 to 4.5, 2 to 4, 2.5 to 4, 3 to 4, or 3.2 to 4, as measured according to ASTM D150.

The polyimide may have a breakdown voltage (BDV) of 100 to 500 kV/mm, 120 to 480 kV/mm, 140 to 450 kV/mm, 150 to 400 kV/mm, 170 to 350 kV/mm, 190 to 320 kV/mm, 200 to 300 kV/mm, 210 to 280 kV/mm, or 220 to 250 kV/mm, as measured according to ASTM D149. The breakdown voltage may be measured by a method known in the art. In one example, the breakdown voltage may be measured as follows. The polyimide is made into a specimen in the form of a film, and all moisture in the film is removed in an oven at 100 °C or less. After that, the specimen is cut to an appropriate size and then a dielectric breakdown tester (Automated Test Set for Insulating Materials, equipment suitable for ASTM D149 standard, PHENIX TECHNOLOGIES 6CCE50-5) is used. After the specimen is placed on a sample table, the voltage is increased from 0 at a constant rate to measure the limiting dielectric strength of an insulator. In addition, the present application relates to a covering material. The covering material may include the polyimide, which is a cured product of the polyamic acid composition described above. The covering material may include a substrate, and the polyimide applied on the substrate. The polyimide may be applied and cured on the surface of a conductor, for example.

The substrate may be a conductor. The conductor may be a copper wire made of copper or a copper alloy, but may also include a conductor made of other metal materials such as a silver wire or various metal-plated wires such as aluminum or a tin-plated wire. The thickness of the conductor and covering material may conform to KSC 3107 standards. The diameter of the conductor may be in the range of 0.3 to 3.2 mm, and a standard film thickness (average value of a maximum film thickness and a minimum film thickness) of the covering material may be 21 to 194 μm for type 0, 14 to 169 μm for type 1, and 10 to 31 μm for type 2. A cross-sectional shape of the conductor may be a round wire, a flat wire, a hexagonal wire, or the like, but is not limited thereto.

In one example, a method of obtaining the covering material may include applying a polyamic acid composition on a surface of a conductor; and imidizing the polyamic acid composition applied on the surface of the conductor.

The present invention may also provide an electronic device including the covering material.

DETAILED DESCRIPTION OF EXEMPLARY EMBODIMENTS

Hereinafter, the present invention will be described in more detail through examples according to the present invention and comparative examples not according to the present invention, but the scope of the present invention is not limited by the examples presented below.

**Example 1**

Preparation of polyamic acid composition

N-methyl-pyrrolidone (NMP) was input into a 500 ml reactor equipped with a stirrer and a nitrogen injection/-discharge pipe while injecting nitrogen, the temperature of the reactor was set to 40 °C, and then 4,4'-diaminodiphenyl ether (or oxydianiline, ODA), pyromellitic dianhydride (PMDA), and modified pyromellitic dianhydride (PMDA*) were input, and complete dissolution was confirmed. Then, 1,4-diaminobenzene (or para-phenylenediamine, PPD) was input and a polymerization reaction was performed in the same manner to prepare a polyamic acid composition.
The above modified pyromellitic dianhydride (PMDA*) is represented by Chemical Formula 4 below.

[Chemical Formula 4]

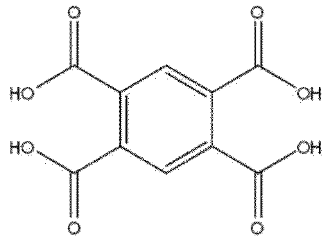

Preparation of polyimide film

The polyamic acid composition was sequentially cured at 100 °C for 20 minutes, 150 °C for 20 minutes, 200 °C for 20 minutes, 300 °C for 20 minutes, 350 °C for 20 minutes, and 110 °C for 60 minutes to obtain a polyimide film having a thickness of 30 µm.

**Examples 2 to 4 and Comparative Examples 1 and 2.**

Polyamic acid compositions and polyimide films of Examples 2 to 4 and Comparative Examples 1 and 2 were prepared in the same manner as in Example 1, except that the monomers and their content ratios in Example 1 were changed as shown in Table 1 below.

[Table 1]

| | Diamine | | Dianhydride | Modified monomer |
|---|---|---|---|---|
| | ODA (mol%) | PPD (mol%) | PMDA (mol%) | PMDA* (mol%) |
| Example 1 | 75 | 25 | 95 | 7 |
| Example 2 | 75 | 25 | | 8.5 |
| Example 3 | 75 | 25 | | 9 |
| Example 4 | 75 | 25 | | 10 |
| Comparative Example 1 | 75 | 25 | | 5 |
| Comparative Example 2 | 75 | 25 | | 0 |

**Experimental Example 1 - viscosity change rates at 23 °C and 30 °C**

The polyamic acid compositions of Examples and Comparative Examples were stored for 1 week in a sealed storage container under 23 °C and 30 °C temperature conditions, and the viscosity change rates were obtained by

measuring the viscosity before and after storage, and the results are shown in Table 2 below.

The viscosity before and after storage was measured using Haake's Rheostress 600 under condition of a shear rate of 1/s, a temperature of 23 °C (or a temperature of 30 °C), and a plate gap of 1 mm.

### Experimental Example 2 - Elongation, tensile strength and modulus

The elongation, tensile strength, and modulus of the polyimide films prepared in Examples and Comparative Examples were respectively measured using a universal testing machine (UTM) apparatus, and the results are shown in Table 2 below.

### Experimental Example 3 - Glass transition temperature

The glass transition temperatures of the polyimide films prepared in Examples and Comparative Examples were measured using a dynamic mechanical analysis (DMA) device, and the results are shown in Table 2 below.

### Experimental Example 4 - 5% thermal decomposition temperature

The 5% thermal decomposition temperatures of the polyimide films prepared in Examples and Comparative Examples were measured using a thermo gravimetric analysis (TGA) device, and the results are shown in Table 2 below.

### Experimental Example 5 - Coefficient of thermal expansion (CTE)

The coefficients of thermal expansion of the polyimide films prepared in Examples and Comparative Examples were measured using a thermo mechanical analysis (TMA) device, and the results are shown in Table 2 below.

### Experimental Example 6 - Dielectric constant

The dielectric constants of the polyimide films prepared in Examples and Comparative Examples were measured according to ASTM D150, and the results are shown in Table 2 below.

### Experimental Example 7 - Breakdown voltage

The polyimide films prepared in Examples and Comparative Examples were made into a specimen, and all moisture in the films was removed in an oven at 100 °C or less. After that, the specimen was cut to an appropriate size and then a dielectric breakdown tester (Automated Test Set for Insulating Materials, equipment suitable for ASTM D149 standard, PHENIX TECHNOLOGIES 6CCE50-5) was used. After the specimen was placed on a sample table, the voltage was increased from 0 at a constant rate to measure the limiting dielectric strength of an insulator, and the results are shown in Table 2 below.

[Table 2]

| | 23 °C Viscosity change rate (%) | 30 °C Viscosity change rate (%) | Tensile strength (MPa) | Modulus (GPa) | Elongation (%) | Glass transition temperature (°C) | 5% Thermal decomposition temperature (°C) | Coefficient of thermal expansion (ppm/°C) | Dielectric constant | Breakdown voltage (kV/mm) |
|---|---|---|---|---|---|---|---|---|---|---|
| Example 1 | 8 | 18 | 185 | 3.2 | 56 | 402 | 561 | 27 | 3.5 | 244 |
| Example 2 | 2 | 3 | 154 | 3.1 | 48 | 412 | 556 | 29 | 3.5 | 244 |
| Example 3 | -3 | 2 | 140 | 3.0 | 32 | 385 | 568 | 28 | 3.6 | 240 |

(continued)

| | 23 °C Viscosity change rate (%) | 30 °C Viscosity change rate (%) | Tensile strength (MPa) | Modulus (GPa) | Elongation (%) | Glass transition temperature (°C) | 5% Thermal decomposition temperature (°C) | Coefficient of thermal expansion (ppm/°C) | Dielectric constant | Breakdown voltage (kV/mm) |
|---|---|---|---|---|---|---|---|---|---|---|
| Example 4 | 7 | 10 | 123 | 3.2 | 13 | 380 | 558 | 28 | 3.5 | 229 |
| Comparative Example 1 | 28 | 51 | 200 | 3.2 | 63 | 414 | 556 | 27 | 3.6 | 252 |
| Comparative Example 2 | 35 | 80 | Not measurable | | | | | | | |

As confirmed in Table 2, Comparative Example 1 is a sample including a relatively small amount of modified monomers compared to Examples, and the viscosity change rate at 23 °C and the viscosity change rate at 30 °C were 28% and 51%, respectively, showing results exceeding the upper limits of 25% and 30%. In addition, even though a molar ratio of the diamine and dianhydride was close to 1: 1, the modified monomer was not sufficiently included, so that desired storage stability could not be secured, resulting in a viscosity change rate value exceeding an upper limit value.

In addition, Comparative Example 2 is a sample that does not include the modified monomer, and the viscosity change rate at 23 °C and the viscosity change rate at 30 °C were 35% and 80%, respectively, showing results exceeding the upper limits of 25% and 30%, and since a molar ratio of the diamine and dianhydride was 100:95, which is lower than a general mixing ratio of 1:1, and a molecular weight was low, no film was formed and other physical properties could not be measured.

[Advantageous Effects]

The present application provides a polyamic acid composition capable of simultaneously implementing excellent storage stability, a low dielectric constant, heat resistance, and insulation, and mechanical properties under harsh conditions (e.g., high temperature), a polyimide which is a cured product of the composition, a covering material including the polyimide, a covered wire including the covering material, and an electronic device including the covered wire.

**Claims**

1. A polyamic acid composition comprising a polyamic acid having a diamine monomer and a dianhydride monomer as polymerization units,
wherein a viscosity change rate at 23 °C ($\Delta V_{23\,°C}$) of the following General Formula 1 satisfies -25% to +25%:

[General Formula 1]

$$\Delta V_{23°C} = (V2 - V1)/V1 \times 100$$

in General Formula 1, $\Delta V_{23°C}$ represents a change rate of viscosity (V2) of the polyamic acid composition stored for 1 week in a sealed storage container under 23 °C temperature conditions based on the viscosity (V1) of the polyamic

acid composition before storage.

**2.** The polyamic acid composition of claim 1, wherein a viscosity change rate at 30 °C ($\Delta V_{30\,°C}$) of the following General Formula 2 satisfies -30% to +30%:

[General Formula 2]

$$\Delta V_{30\,°C} = (V4 - V3)/V3 \times 100$$

in General Formula 2, $\Delta V_{30\,°C}$ represents a change rate of viscosity (V4) of the polyamic acid composition stored for 1 week in a sealed storage container under 30 °C temperature conditions based on the viscosity (V3) of the polyamic acid composition before storage.

**3.** The polyamic acid composition of claim 1, further comprising a modified monomer represented by Chemical Formula 1 below:

[Chemical Formula 1]

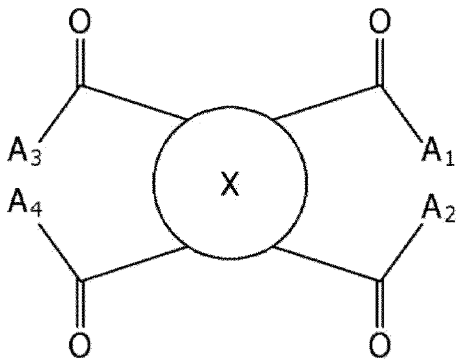

in Chemical Formula 1, $A_1$ to $A_4$ are each independently selected from a hydroxyl group (-OH), an amine group ($-NH_2$), an alkoxy group, or an oxygen anion ($-O^-$),
in Chemical Formula 1, X is a tetravalent aliphatic ring group, a tetravalent heteroaliphatic ring group, a tetravalent aromatic ring group, or a tetravalent heteroaromatic ring group, and a carbon atom of a carbonyl group in Chemical Formula 1 is linked to a ring-constituting atom of the aliphatic ring group, the heteroaliphatic ring group, the aromatic ring group, or the heteroaromatic ring group, and
the aliphatic ring group, the heteroaliphatic ring group, the aromatic ring group, or the heteroaromatic ring group is a monocyclic ring,
conjugated to each other to form a polycyclic ring, or
linked by a linking group including one or more of divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, - O-, -S-, -C(=O)-, $-S(=O)_2-$ and $-Si(R_a)_2-$, wherein $R_a$ is hydrogen or an alkyl group.

**4.** The polyamic acid composition of claim 3, wherein the modified monomer represented by Chemical Formula 1 is included in an amount of 6 to 15 mol% based on 100 mol% of the diamine monomer of the polyamic acid.

**5.** The polyamic acid composition of claim 1, wherein the dianhydride monomer includes at least one compound represented by Chemical Formula 2 below:

[Chemical Formula 2]

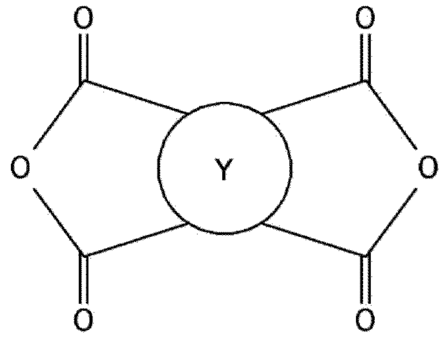

in Chemical Formula 2, Y is a tetravalent aliphatic ring group, a tetravalent heteroaliphatic ring group, a tetravalent aromatic ring group, or a tetravalent heteroaromatic ring group, and a carbon atom of a carbonyl group in Chemical Formula 2 is linked to a ring-constituting atom of the aliphatic ring group, the heteroaliphatic ring group, the aromatic ring group or the heteroaromatic ring group, and
the aliphatic ring group, the heteroaliphatic ring group, the aromatic ring group, or the heteroaromatic ring group is a monocyclic ring,
conjugated to each other to form a polycyclic ring, or
linked by a linking group including one or more of divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, - O-, -S-, -C(=O)-, $-S(=O)_2-$ and $-Si(R_a)_2-$, wherein $R_a$ is hydrogen or an alkyl group.

6. The polyamic acid composition of claim 1, wherein the diamine monomer includes at least one compound represented by Chemical Formula 3 below:

[Chemical Formula 3]

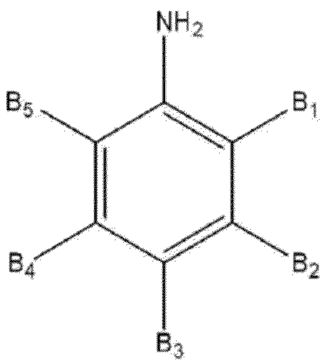

in Chemical Formula 3, any one of $B_1$ to $B_5$ is an amino group, and the others are hydrogen; a halogen; a hydroxyl group; a carboxyl group; or a halogen-substituted or unsubstituted alkyl group.

7. The polyamic acid composition of claim 3, wherein a molar ratio (A:B) of the dianhydride monomer (A) and the modified monomer (B) of the polyamic acid ranges from 1:0.06 to 1:0.15.

8. The polyamic acid composition of claim 1, wherein a solid content ranges from 5 to 40% by weight.

9. The polyamic acid composition of claim 1, wherein a viscosity measured at a temperature of 30 °C and a shear rate of 1 $s^{-1}$ ranges from 1,000 to 50,000 cp.

10. A polyimide, which is a cured product of the polyamic acid composition of claim 1.

**11.** The polyimide of claim 10, wherein an elongation measured using a universal testing machine (UTM) ranges from 10% to 60%.

**12.** The polyimide of claim 10, wherein a coefficient of thermal expansion (CTE) measured using a thermo mechanical analysis (TMA) device ranges from 0.1 ppm/°C to 50 ppm/°C

**13.** The polyimide of claim 10, wherein a glass transition temperature measured using a dynamic mechanical analysis (DMA) device ranges from 200 to 500 °C

**14.** The polyimide of claim 10, wherein a 5% thermal decomposition temperature measured using a thermo gravimetric analysis (TGA) device ranges from 450 to 650 °C

**15.** The polyimide of claim 10, wherein a dielectric constant (Dk) measured according to ASTM D150 ranges from 1 to 5.

**16.** The polyimide of claim 10, wherein a breakdown voltage (BDV) measured according to ASTM D149 ranges from 100 to 500 kV/mm.

**17.** A covering material comprising:

a substrate; and
the polyimide according to any one of claims 10 to 16 applied on the substrate.

**18.** The covering material of claim 17, wherein the substrate is a conductor.

**19.** An electronic device comprising the covering material of claim 17.

**INTERNATIONAL SEARCH REPORT**

International application No.
**PCT/KR2023/009190**

**A. CLASSIFICATION OF SUBJECT MATTER**

**C08G 73/10**(2006.01)i; **C08L 79/08**(2006.01)i; **C09D 179/08**(2006.01)i

According to International Patent Classification (IPC) or to both national classification and IPC

**B. FIELDS SEARCHED**

Minimum documentation searched (classification system followed by classification symbols)

C08G 73/10(2006.01); C08J 5/18(2006.01); C08L 79/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 폴리아믹산(polyamic acid), 디아민 단량체(diamine monomer), 디안하이드라이드 단량체(dianhydride monomer), 점도 변화율(rate of viscosity change), 테트라카르복실산(tetracarboxylic acid), 폴리이미드(polyimide)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0037336 A (PI ADVANCED MATERIALS CO., LTD.) 06 April 2021 (2021-04-06) See claims 1 and 13; paragraphs [0005], [0006], [0040], [0041], [0043], [0044], [0052], [0086], [0088], [0089], [0092], [0099], [0106], [0107], [0122], [0123], [0125], [0127] and [0134]; example 1; and tables 1 and 2. | 1-19 |
| X | CN 111116913 A (FUYANG SINEVA MATERIAL TECHNOLOGY CO., LTD.) 08 May 2020 (2020-05-08) See claims 1, 2, 4, 5 and 10; paragraphs [0007], [0010]-[0012], [0014] and [0029]-[0031]; example 1; and table 2. | 1-19 |
| X | KR 10-2030841 B1 (SKCKOLONPI INC.) 10 October 2019 (2019-10-10) See claims 1-5 and 16-19; paragraphs [0017]-[0020], [0052], [0053], [0081]-[0084] and [0125]; example 1; and table 3. | 1-19 |
| X | CN 109666144 B (CHINA PETROLEUM & CHEMICAL CORP. et al.) 01 October 2021 (2021-10-01) See claim 1; paragraphs [0010]-[0014], [0020] and [0027]; and example 1. | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 October 2023** | **30 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/009190

C. DOCUMENTS CONSIDERED TO BE RELEVANT

| Category* | Citation of document, with indication, where appropriate, of the relevant passages | Relevant to claim No. |
|---|---|---|
| X | KR 10-2021-0037331 A (PI ADVANCED MATERIALS CO., LTD.) 06 April 2021 (2021-04-06) See claims 1, 2, 7 and 10-13; paragraphs [0005], [0006], [0039], [0040] and [0072]; example 1; and tables 1 and 2. | 1-19 |

Form PCT/ISA/210 (second sheet) (July 2022)

**INTERNATIONAL SEARCH REPORT**
**Information on patent family members**

International application No.
**PCT/KR2023/009190**

| Patent document cited in search report | Publication date (day/month/year) | Patent family member(s) | Publication date (day/month/year) |
|---|---|---|---|
| KR 10-2021-0037336 A | 06 April 2021 | KR 10-2246227 B1 | 29 April 2021 |
| | | WO 2021-060612 A1 | 01 April 2021 |
| CN 111116913 A | 08 May 2020 | None | |
| KR 10-2030841 B1 | 10 October 2019 | WO 2020-022564 A1 | 30 January 2020 |
| CN 109666144 B | 01 October 2021 | CN 109666144 A | 23 April 2019 |
| KR 10-2021-0037331 A | 06 April 2021 | KR 10-2246218 B1 | 29 April 2021 |
| | | WO 2021-060613 A1 | 01 April 2021 |

Form PCT/ISA/210 (patent family annex) (July 2022)